# EUROPEAN PATENT APPLICATION

(11) **EP 4 793 823 A1**
(43) Date of publication of application: **19.08.2026**
(21) Application number: 25171294.9
(22) Date of filing: 17.04.2025
(51) Int. Cl.: G06K 19/07

(54) **DEVICE AND METHOD FOR ADAPTING A SUPPLY VOLTAGE**

(30) Priority: 14.02.2025 IN 202541012832
(71) Applicant: NXP B.V., 5656 AG Eindhoven (NL)
(72) Inventor: Stadlmair, Rainer, 5656AG Eindhoven (NL); Joshi, Shankar, 5656AG Eindhoven (NL); Patange, Sreedhar, 5656AG Eindhoven (NL)
(74) Representative: Krott, Michel

(57) **Abstract**

A method (800) for adapting a supply voltage of a device comprises: configuring (810) a change in an operational state of the device; measuring (820) a temperature of the device; determining (830) a supply voltage level for the device to operate in the configured operational state; and adapting (840) a supply voltage of the device in dependence on at least the measured temperature and the supply voltage level for the device to operate in the configured operational state.

## Description

### Technical Field

The technical field relates generally to a device with a digital control circuit and a method to adapt a supply voltage of the device. The technical field is applicable to, but not limited to, a radio frequency identifier (RFID) device or circuit and a method to adapt the supply voltage according to temperature and an operational state (or condition, such as an operating frequency).

### Background

Radio-frequency identification (RFID) has an enormous variety of uses, ranging from public transportation to animal identification to product tracking. In industrial environments, RFID tags are used to track parts or assets, which is useful for automation and/or logistics purposes. It is known that RFID devices/tags can typically be divided into three frequency groups: low frequency (LF), high frequency (HF), and ultra-high frequency (UHF), tags, where each frequency group of the RFID devices/tags is dedicated to their own typical uses because of their inherent advantages, typically-based on a 'reading distance' of the RFID (which is based on the operating frequency). Low Frequency RFID (typically in a frequency range from 30 to 300 KHz) has the shortest read distance, typically around 10cm between the reader and the tag. The read time is also slower, however, the low frequency has the least amount of radio interference. LF RFID is therefore typically used for applications such as animal tracking and access control. High Frequency RFID (typically in a frequency range from 3 to 30 MHz) provides a read distance typically around 10cm to 1m. The majority of HF RFID devices function at 13.56 MHz, with moderate radio interference sensitivity and often involve Near Field Communication (NFC), which focuses around data transfer between two devices. This is often seen in smart payment cards and other proximity-activated devices. HF RFID devices/tags can accommodate read-only, write-only, and rewritable RFID tags, with memory capacity from 64 bytes to 8 KB. Ultra-High Frequency RFID tags have the fastest reading speed and the longest read range.

Another known approach in classifying RFID devices/tags is how they are powered, i.e., active, semi-active (or battery-assisted passive (BAP)) and passive. Active devices/tags are devices/tags that consistently emit radio signals in order to be picked up by a reader. These devices/tags are accompanied by a battery or another continuous power source, and an antenna to transmit and receive radio frequency signals. Semi-active or BAP devices/tags use a battery to power the tag's integrated circuitry without sending signals, while the signal power comes directly from the RFID reader. Both active and semi-active RFID tags operate over longer ranges than passive tags. Passive devices/tags are powered solely by the reader's magnetic field emissions, which induce a current in a passive tag's antenna. The RFID examples herein described are only related to active and semi-active (or BAP) powered devices.

In semiconductor circuits, and especially RFID devices/tags/circuits, power consumption plays a crucial role for performance. In RFID circuits, reading distance may be equated to 'power consumption', since the power supply is provided by a reader device via an air interface. Thus, minimizing power consumption is a major concern and design factor in RFID circuit design. It is often also mandatory to monitor the supply voltage conditions and trigger a device reset when a supply voltage is too low. It is known that a defined voltage level is needed at which logic cells can be characterized for proper digital timing closure, where timing closure is known to be the process that determines whether (or not) an integrated circuit's/chip's speed satisfies the timing constraints and ensures that all the signals arrive at the correct logic device or circuit at the correct time for smoother chip operation.

It is known that a RFID stable supply voltage can help with timing closure and easy monitoring of logic gate states via supply sensors (using a fixed bandgap reference). Since pmos and nmos transistors conduction threshold is temperature dependent, a higher temperature will, however, result in higher operating and leakage current, if the supply voltage stays constant. Each transistor (pmos and nmos) has a threshold voltage from which, onwards, they start conducting. The higher the threshold, the more voltage is needed to turn the device 'on', and the device operates slower (since it has less overdrive and can conduct less current when the threshold increases, which causes a slower transition time from 'high' to 'low', and vice versa). Normally, it is assumed that a power supply generally provides a constant voltage independent of temperature. However, the inventors have recognized and appreciated the fact that the threshold voltage is dependent on the temperature and varies by approximately '-2mV/K', which has a significant effect on low-power devices, particularly battery-powered devices or wireless devices such as RFID devices/tags.

Thus, the inventors have recognized and appreciated that in order to keep low-power devices, (e.g., battery-powered devices or wireless devices such as a RFID device/tag/circuit) working well under all conditions, it needs to be optimized for the worst-case condition (e.g., a lowest operating temperature). However, this results in an additional current consumption at higher temperatures, if the same supply voltage is used, since there the thresholds are lower, whereas higher thresholds are observed at lower temperatures. To mitigate this effect, it is known that the supply voltage can be lowered based on the temperature. However, the inventors have also recognized and appreciated that these known techniques follow the temperature continuously (e.g., by using a diode as reference). In this manner, these continuous adjustment techniques deliver optimum power but are hard to verify in all conditions and are also extremely difficult to monitor with a voltage sensor.

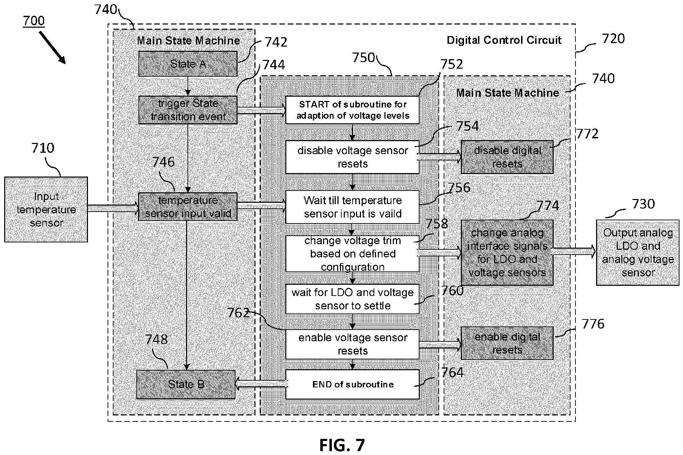

US7095288B2, titled 'Logic system with adaptive supply voltage control', describes a mechanism that uses an oscillator to determine a delay of digital logic and adapts the supply voltage continuously (see figure 7(a)) that matches the speed of the oscillator. Accordingly, there is a need for an improved device and method of when to adapt a supply voltage according to variable conditions.

### Summary

Examples described herein provide a device, such as an RFID device or tag or circuit, and method for adapting a supply voltage, as described in the accompanying claims. Specific examples are set forth in the dependent claims. These and other aspects will be apparent from and elucidated with reference to the examples described hereinafter.

### Brief description of the drawings

Further details, aspects and examples will be described, by way of example only, with reference to the drawings. In the drawings, like reference numbers are used to identify like or functionally similar elements. Elements in the figures are illustrated for simplicity and clarity and have not necessarily been drawn to scale.
FIG. 1 illustrates a graphical explanation of a supply voltage change following a temperature assessment and dependence on either a low-frequency of operation or a high-frequency of operation, in accordance with some examples.
FIG. 2 illustrates a block diagram of a device, adapted in accordance with some examples.
FIG. 3 illustrates one example of a timing diagram that shows the change of the supply voltage in dependence on switching frequency, according to examples.
FIG. 4 illustrates one example of a flowchart for a digital control circuit (state machine or central processing unit (CPU) based) when switching from a low-frequency to a high-frequency, according to examples.
FIG. 5 illustrates one example of a flowchart for a digital control circuit (state machine or CPU based) when switching from a high-frequency to a low-frequency, according to examples.
FIG. 6 illustrates one example of a timing diagram relating to a sequence for changing the operational state, according to examples.
FIG. 7 illustrates a further example of a flowchart for a digital control circuit (state machine or CPU based) when switching from a first operational state 'A' to a second operational state 'B', according to examples.
FIG. 8 illustrates an overview example of a flowchart for a method for adapting a supply voltage of a device, according to some examples.

### Detailed description

The inventors have recognized and appreciated that, particularly for radio frequency identifier (RFID) device chips, maintaining a reliable operating power supply is important to achieve good performance. To overcome the previously-identified problem, examples herein described propose configuring operational state (for example a receive mode, a transmit mode, a crypto operation, etc.) and then measuring a temperature of the device or an integrated circuit that is provided with a voltage supply. Thereafter, in dependence on the measured temperature and the configured operational state examples propose to adapt a threshold voltage in order optimize power consumption per configured operational state.

In some instances, a change in the configured operational state may involve a change in operational frequency, where in such an instance, following an assessment of the temperature, in response to a change in operational frequency, examples adapt a threshold voltage in order optimize power consumption per the operational frequency of the configured operational state. Similarly, in some instances, for example operating a co-processor but at the same frequency, a change in the configured operational state may involve a change in power. Thus, a change in operational frequency and a change in power may be considered a subset of a change between configured operational states.

In some examples, an improved device and method are described that decides to adapt a supply voltage in discrete steps following a measured temperature. Thereafter, the improved device and method propose to configure an operational state (for example a receive mode of operation, transmit mode of operation, crypto mode of operation, etc.) in order to optimize a device's supply voltage (which in some examples encompasses a device's power or 'power consumption') per operational state or change thereof, in dependence on the measured temperature. The inventors have recognized that when adopting or changing to some operational states the device's power consumption and/or frequency of operation may change as well (for example transition to a higher or lower operating frequency), whereas in some or operational states the device's power consumption and/or the frequency of operation may not change.

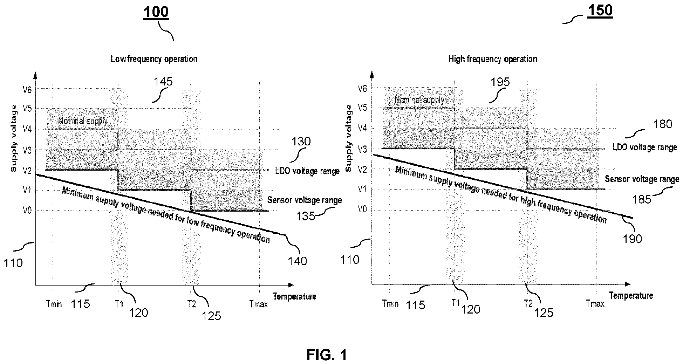

In some examples, a finite number of supply voltage levels may be applied and used where each supply voltage stays constant, as illustrated in FIG. 1. Therefore, in some examples and when operating within a certain temperature range, the supply voltage may be monitored easily, and a timing closure can be performed at the boundaries of the given operating conditions (e.g., at a minimum and maximum temperature at the same supply voltage level. In some examples, this may be performed for all different supply levels).

It is known that the threshold supply voltage of semiconductor transistors is temperature-dependent in that a higher temperature reduces the threshold voltage. Thus, for power saving purposes the inventors have recognized that it is desirable to adjust the supply voltage following a device, circuit or tag temperature measurement and thereafter in dependence on an operational state of the RFID device, circuit or tag. For completeness, it is intended that the examples herein described may be applied in any device or circuit, such as an RFID device, RFID tag or RFID circuit, encompassed and referred to hereafter as 'device'. In some examples described herein, a step-wise adjustment of the supply voltage is effected in dependence on specific temperature thresholds. In some examples described herein, the adjustment of the supply voltage is carried out only at specific operational states/conditions, for which the supply voltage can be adjusted based on a configurable value.

Referring now to FIG. 1, two graphical examples of a supply voltage change following a device temperature measurement are illustrated, with a first graph 100 showing a low-frequency of operation and a second graph 150 for a high-frequency of operation, adapted in accordance with some example embodiments. The first graph 100 and second graph 150 illustrate supply voltage 110 versus temperature 115, where in these examples the temperature 115 specifically highlights a lower first lower temperature threshold 120 and a second higher temperature threshold 125. Thus, some examples adopt a stepwise approach for an adjustable supply voltage following a respective temperature measurement of the device. In accordance with some examples, it is envisaged that the temperature thresholds may be adjusted in dependence on the operational state, and in some examples the operating frequency, of the device such that the adaptation of the supply voltage is arranged to occur only at specific points in time (e.g., when the RFID device transitions from one operational state to another, or when the operational state, for example, operating frequency changes).

Here, in some examples and in response to the operational state itself (e.g., switching from one operational state to another operational state), it is envisaged that a change in the operational state may be in a state machine design switching from operational state 'A' to operational state 'B', to operational state 'C' or in a central processing unit (CPU)-based design enabling a co-processor or executing a sub-routine, where the various operational states may be an IDLE state, a PROCESSING state, etc.). Similarly, it is envisaged that in some examples, if say a co-processor is activated, more power is required (e.g., consumed) where there might not be a change in operating frequency.

In accordance with some examples, the RFID device may include a temperature sensor that is arranged to measure an operating temperature of an integrated circuit (IC). When configuring a new operational state, a temperature measurement is initiated. In response to the measured operating temperature, a digital control circuit of the RFID device adjusts the supply voltage, which in some examples may be in response to a change of temperature, that may cross a certain temperature threshold, e.g., lower temperature threshold (T1) 120 and/or upper temperature threshold (T2) 125. In accordance with some examples, the temperature threshold(s) may be made configurable, controlled by a digital control circuit or processor, with the configurable thresholds stored in a memory together with supply voltage information. In these examples, between the temperature thresholds, the supply voltage 145, 195 remains stable so that between the lower temperature threshold (T1) 120 and/or upper temperature threshold (T2) 125, a constant voltage supply condition is present. This allows timing closure and easy supply monitoring between two temperature thresholds (e.g., Tmin and lower temperature threshold (T1) 120; lower temperature threshold (T1) 120 and upper temperature threshold (T2) 125; or upper temperature threshold (T2) 125 and Tmax). As shown in the first graph 100 and second graph 150 different supply voltages are provided for different frequencies of operation, whereby if the frequency is lower, the edge-to-edge timing is higher → T = 1/f.

In accordance with some examples, the RFID device may also include a configurable low-dropout (LDO) regulator voltage range 130, 180 or voltage sensor (sensor voltage range 135, 185), where a LDO regulator is a type of a DC linear voltage regulator circuit that can operate even when the supply voltage is very close to the output voltage. In accordance with some examples, the LDO regulator or voltage sensor may be adapted once the temperature threshold, e.g., the lower temperature threshold (T1) 120 or upper temperature threshold (T2) 125, is crossed. Thus, in some examples, a 'sensor' may be modified (e.g., re-configured) if there is a temperature change because in some examples the voltage sensor should follow the LDO regulator. If the LDO output voltage is lowered by a certain amount (e.g., 50mV) and the voltage sensor monitors the same voltage level, it is envisaged that the voltage sensor may trigger and cause a reset. To avoid this, the voltage sensor should be configured to follow the change of the LDO. In some examples, this tracking may include upwards as well since a too-low supply voltage may cause a malfunction of the logic (which shall be caught by the voltage sensor) in some examples. In accordance with some examples, the RFID device may also include a digital circuit that evaluates the output of the temperature (i.e., measures a current temperature of the device or IC) under specific conditions (e.g., a change of operational state and/or clock frequency). In some envisaged examples, there are two ways how temperature may be measured: continuously, or only at specific points in time (e.g., when the temperature sensor may be disabled to further save power if it is not needed. In some examples described herein, before a change in operational state (which may include a change in the operating frequency and/or power consumption) is performed, a temperature measurement may be made. In a case of continuous temperature measurement, a simple evaluation of the current measured temperature may be made. However, in a case of a temperature measurement at a specific point in time, it is envisaged that it may be important to ensure that the temperature measurement is started and evaluated before or after the operating state (e.g., the operating frequency or power consumption) is changed.

In some examples, for example following a change of operating frequency, it is envisaged that the device or IC may need a different minimum supply voltage 140, 190 for a particular measured temperature and operational state, since the settling time between clock edges may change (for example, for lower frequencies, timing between two edges is longer and therefore more delay time for digital cells can be allowed). Thus, as illustrated in FIG. 1 for each operating frequency, a different supply voltage step may be employed.

In some examples, for example following a change of operational state, a determination is made as to whether the supply voltage may be adapted based on the current measured temperature (e.g., if the temperature changed and passed over a temperature threshold, for example T1 120 or T2 125 in in FIG. 1, then the supply voltage is adapted accordingly. Also, it is envisaged that the voltage supply steps may be adjustable for each different operational state.

In accordance with some examples, it is envisaged that the RFID device may also include more than two configurable temperature thresholds and/or more than two configurable supply voltage thresholds.

In some examples described herein, a power saving mechanism is provided that measures a temperature of the device or an IC in the device, compares the measured temperature to one or more temperature thresholds and thereafter, in dependence of an operational state of the device (which in some examples may involve an operating frequency change), adapts a supply voltage. In some examples, it is envisaged that using specific temperature steps based on temperature thresholds may be used, where the supply voltage is maintained at constant voltage level across a temperature range between (at least) two temperature thresholds. In this manner, this approach may help with sensors (such as LDO regulator or voltage sensor) that monitor the supply voltage, to ensure that the supply voltage is always maintained within a specific supply voltage range. In this manner, this approach may also help with digital timing closure. In this context, digital logic cells are known to have intrinsic delays (e.g., the time it takes from a signal to transition from a 'low' logic state to a 'high' logic state, or vice versa). This delay is often dependent on one or more of: temperature, voltage, load, process, etc. Thus, timing closure ensures that a digital cell has a sufficiently high drive strength in order to meet the timing requirements to ensure that logic circuits/cells can function properly. In some scenarios, this may be known as Static Timing Analysis (STA) signoff that ensures that Setup and Hold requirements of some digital design logic cells are achieved across all given Process variations, Voltage variations and Temperature variations (sometimes referred to as PVT corners).

In some examples described herein, it is envisaged that adaptation of the supply voltage may be additionally based on the operating conditions (e.g. operation using a faster clock may require a use of a higher supply voltage than operation with a lower clock speed). Hence, when supplying slower clocks, there is less risk of not operating the correct supply voltage due to the prevailing ambient temperature changes, as temperature, operating voltage and loading conditions influence the intrinsic delay of a digital cell. If the RFID device operates with a lower frequency, a longer intrinsic delay may be tolerated, since the time between the operating edges increases → T = 1/f. Thus, examples herein described may provide two instances that require an adaptation of the supply voltage: change in temperature and/or change in operating frequency at a specific measured temperature. In this manner, keeping the voltage supply constant over temperature would result in increased power consumption at higher temperature, which in turn would lead to worse operating performance (e.g., a potential earlier system reset, lower reading distance, etc.).

As an example of the graphs of FIG. 1, Table 1 describes one example approach to adapting the voltage supply following a measurement of the device or IC operating temperature being identified as falling into one of three ranges: Tmin to T1; T1 to T2 and T2 to Tmax. In a given discrete operating state, the temperature is measured and the supply voltage adjusted (LDO) to a new value, based on the 'present supply voltage' and the 'measured temperature' as mentioned in following table (referring only to the first graph 100 but also applies to the second graph 150).

**Table 1:**

| In Table 1 (and referring to FIG. 1), 'Measured temperature < T1' refers to 'Tmin to T1'; 'T1 < Measured temperature is < T2 ' refers to 'T1 to T2'; and 'Measured temperature > T2 ' refers to 'T2 to Tmax'. | | | |
|---|---|---|---|
| | Measured temperature is < T1 (refer to FIG 1.) | T1 < Measured temperature is < T2 (refer to FIG 1) | Measured temperature > T2 (refer to FIG 1.) |
| Present supply voltage (LDO) is equal to | Present supply voltage is already at V4 that is same as | Adjust supply voltage from V4 to V3 as per Fig 1. | Adjust supply voltage from V4 to V2 as per Fig 1. |
| V4 as per FIG 1., which corresponds to Temperature < T1 threshold | that for measured temperature. | | |
| | Therefore, no need to adjust supply voltage any further | | |
| Present supply voltage (LDO) is equal to V3 as per FIG 1., which corresponds to T1 < Measured temperature is < T2 | Adjust supply voltage from V3 to V4 as per FIG 1. | Present supply voltage is already at V3 that is same as that for measured temperature. | Adjust supply voltage from V3 to V2 as per FIG 1. |
| | | Therefore, no need to adjust supply voltage any further | |
| Present supply voltage (LDO) is equal to V2 as per FIG 1., which corresponds to Measured temperature > T2 | Adjust supply voltage from V2 to V4 as per FIG 1. | Adjust supply voltage from V2 to V3 as per FIG 1. | Present supply voltage is already at V2 that is same as that for measured temperature. |
| | | | Therefore, no need to adjust supply voltage any further |

For a discrete operating state, the operating frequency is checked and supply voltage adjusted (by the LDO regulator) to a new supply voltage level based on the 'present supply voltage' and 'operating frequency' as mentioned in Table 2, with no change of measured temperature. Table 2 (below) illustrates an example scenario where the temperature changes as well, in which case the approaches/changes proposed in both the example Table 1 and example Table 2 may be applied.

**Table 2:**

| | Operating frequency changes from 'low' to 'high' (e.g., comparing first graph 100 with second graph 150 in FIG 1) |
|---|---|
| Present supply voltage (LDO) is equal to V4 as per FIG 1., which corresponds to Low operating frequency & Temperature < T1 | Adjust supply voltage from V4 to V5 as per Fig 1. |
| Present supply voltage (LDO) is equal to V3 as per FIG 1., which corresponds to Low operating frequency & T1 < Temperature is < T2 | Adjust supply voltage from V3 to V4 as per FIG 1. |
| Present supply voltage (LDO) is equal to V2 as per FIG 1., which corresponds to Low operating frequency & Temperature > T2 | Adjust supply voltage from V2 to V3 as per FIG 1. |

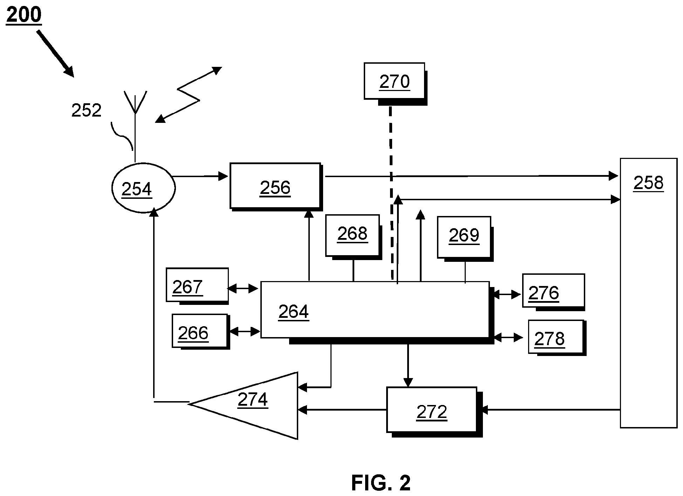

Referring now to FIG. 2, a block diagram of a device 200 is illustrated. In this example, the device 200 is a wireless radio frequency identifier (RFID) device, and as such it contains an antenna 252, for receiving RFID transmissions, coupled to an antenna switch or filter 254 that provides isolation between receive and transmit chains within the device 200. A receiver chain, as known in the art, includes receiver front-end circuitry 256 and optionally filtering and base-band frequency conversion. The receiver front-end circuitry 256 is coupled to a signal processor 258 (generally realized by a digital signal processor (DSP)). A skilled artisan will appreciate that the level of integration of receiver circuits or components may be, in some instances, implementation-dependent.

A digital control circuit 264 maintains overall operational control of the device 200 and notably monitors an operational state of the device 200. The digital control circuit 264 is also coupled to the receiver front-end circuitry 256 and the signal processor 258. In some examples, the digital control circuit 264 is also coupled to a frequency generation circuit 267 and a memory 266 that selectively stores temperature ranges and thresholds, voltage supply information and thresholds, etc. A timer 268, for example configured to monitor the settling time, etc., is operably coupled to the digital control circuit 264 to control the timing of operations (e.g., transmission or reception of time-dependent signals) within the device 200.

As regards the transmit chain, this essentially includes a transmitter circuitry 272 and a RF amplifier 274 coupled to the antenna 252. The transmitter circuitry 272 and the RF amplifier 274 are operationally responsive to the digital control circuit 264. Clearly, the various components within the device 200 can be realized in discrete or integrated component form, with an ultimate structure therefore being an application-specific or design selection.

In accordance with examples described herein, the device includes a temperature sensor 269 connected to the digital control circuit 264 and arranged to measure the temperature of one or more of the device 200, an IC supplied by a voltage supply 270. In accordance with examples described herein, the digital control circuit 264 is connected to and controls/monitors a voltage sensor 278 and a LDO regulator 276. The LDO regulator 276 generates a stable supply voltage for digital circuits in the device 200. A reconfiguration of the LDO regulator 276 provides different supply voltage levels (as described in FIG. 1). The voltage sensor 278 is arranged to monitor the level of the supply voltage and indicate, say, if the supply voltage level is too low. Hence, the voltage sensor 278 needs to track the LDO regulator 276, ideally with a certain offset. In some examples, it is envisaged that in some applications with a known reliable supply voltage, the monitoring of the supply voltage by a voltage sensor 278 may not be needed. In some examples, such as the example in FIG. 2, the voltage sensor 278 may be included for security reasons.

In some examples, the digital control circuit 264 sets an operation frequency of the frequency generation circuit 267, and uses this information together with the temperature measured by the temperature sensor 269 and information stored in the memory 266 to set a supply voltage provided by the voltage supply 270. In some examples, the digital control circuit 264 is configured to control the operating frequency and operational state of the device 200 and determines whether a threshold has been passed/triggered and then changes the supply voltage 270, for example in a step-wise manner. In particular, if the digital control circuit 264 want to perform a certain operation, digital control circuit 264 initiates a change in operating frequency or operating state, so that it knows exactly what is going to happen. Thus, digital control circuit 264 is able to initiate a temperature measurement before a change in operating state (e.g., change in power and/or frequency) and adapt the supply voltage beforehand too, as described with reference to FIG's 4, 5 and 7.

In some examples, the digital control circuit 264 refers to an example digital design implementation, which may implement a Finite State Machine (FSM) or a processor-based function in order to regulate the digital supply voltage by updating a trim value of an analog LDO regulator 276. It is envisaged that in other examples, analog measurements and sensors and control circuits may be used. In some examples, the digital control circuit 264 may control and adapt a step size when changing a configurable voltage amplitude following a temperature measurement and in dependence on an operational state of the device 200.

In accordance with some examples, one example sequence for changing the operating frequency follows the following steps. If there is no change in temperature, a change of the LDO regulator 276 and voltage sensor 278 setting may only be due to the required higher frequency at this particular temperature. If a change in temperature happens as well, as monitored by temperature sensor 269, in some examples a corresponding supply voltage change has to be added on top of any other supply voltage adjustment (e.g. if the temperature falls below T1, an additional offset between T1 and Tmin needs to be added, whereas if the temperature increases above T2, then the offset between T2 and Tmax needs to be subtracted assuming the temperature range was between T1 and T2 at the start).

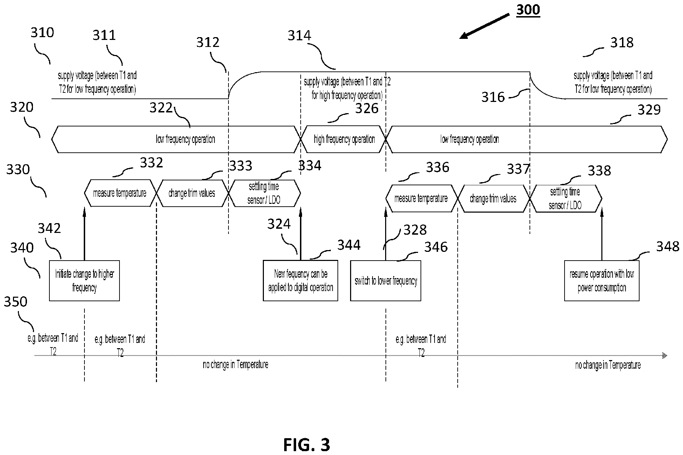

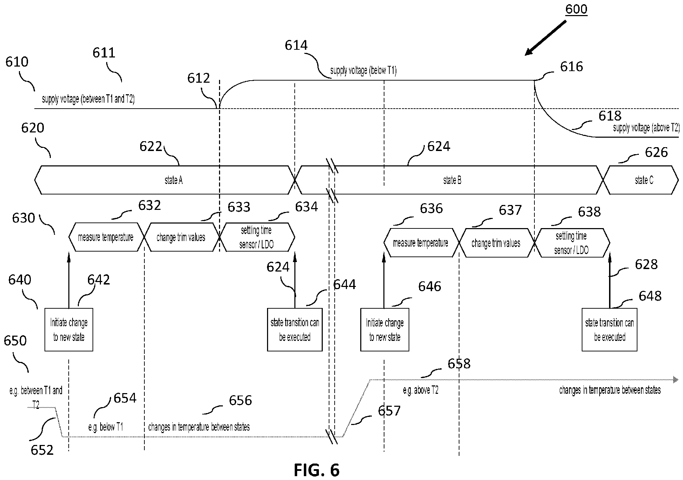

Referring now to FIG. 3, one example of a timing-waveform diagram 300 is illustrated that relates to a sequence for changing the supply voltage based on switching frequency, according to some example embodiments. In the example timing diagram, a temperature of the device or a device IC has been measured, but no temperature change is considered (unlike the timing diagram of FIG. 6) as illustrated at 350. If a temperature change occurs, an additional offset needs to be added, as shown in the timing diagram of FIG. 6. A supply voltage waveform 310 illustrates the supply voltage transition at 312 from a median supply voltage 311 when the device temperature is between a lower temperature threshold (T1) and a higher temperature threshold (T2), for a low frequency operation mode, to a higher supply voltage 314 when the device temperature remains between the lower temperature threshold (T1) and the higher temperature threshold (T2), for a high frequency operation mode. The supply voltage waveform 310 also illustrates the supply voltage transition at 316 from the higher supply voltage 314 when the device temperature remains between the lower temperature threshold (T1) and the higher temperature threshold (T2), for a low frequency operation mode again.

A second timing diagram 320 illustrates the timing of transitions between various operational frequencies (e.g., operational states), namely a low frequency operational state 322, a high frequency operational state 324, and thereafter a low frequency operational state 326 again, which may repeat in this manner. A third timing diagram 330 illustrates device operations/functions, that triggers a timing of transitions in the supply voltage waveform 310 and the second timing diagram 320. The third timing diagram 330 is also triggered by actions in a fourth timing diagram 340. The fourth timing diagram actually initiates the changes in the third timing diagram 330 of the device operations/functions, for example, should the FSM want to change the operating frequency to a higher frequency (e.g., following a command that is sent that requests a certain operation). The fifth timing diagram 350 shows the temperature at different operating frequencies. In the example in FIG 3, there is no change in temperature, only a change in operating frequency (i.e., fifth timing diagram 350 shows a flat line). Thus, the adaption of the supply voltage only needs to consider the requirement due to the frequency change. This would correspond to the adaption described in Table 2, line 2 from V3 to V4.

As illustrated, the device changes from a lower frequency to a higher frequency at 342 that initiates, in the third timing diagram 330, the device temperature being measured at 332 and trim values being changed at 333, following which the supply voltage is changed at 312. In this context, the trim value may be an interface signal between digital and the analog interface, for example where a certain number of trim bits (e.g., 5 bits) allow (e.g., 32) a number of different settings when decoded (2^5 = 32). In some examples, it is envisaged that if a standard setting of e.g., 16, is used, then the increased voltage setting may be configured to add an offset of '4', which in some examples may be configurable, which would result in a new setting of 16+4=20. If a step of '1' equals 12.5mV, then the LDO output voltage would increase by up to 50mV, when 4 steps may be employed. In analog (at the LDO), simply a different reference voltage is selected to which the regulation loop will regulate (standard implementation for an LDO loop). The same is true for the voltage sensor.

A settling time of the voltage sensor and/or LDO regulator is allowed at 334, to ensure that the output of the LDO regulator and the voltage sensor output are stable before switching to a higher frequency operation, following which a new frequency can be applied to a digital operation 344 at 324. Waiting a specific settling time may enable the RFID to achieve full power saving potential.

As also illustrated, the device changes from a higher frequency to a lower frequency at 328 that initiates, in the third timing diagram 330, the device temperature being measured at 336 and trim values being changed at 336, following which the supply voltage is changed at 316. A settling time of the voltage sensor and/or LDO regulator is allowed at 338, following which low power consumption is performed 348. For example, power consumption is related to operating frequency, which was already reduced at 328 and noting that voltage level was reduced at 316 but settled to the lowest voltage level at 348. From that moment onwards, the power consumption is at its lowest.

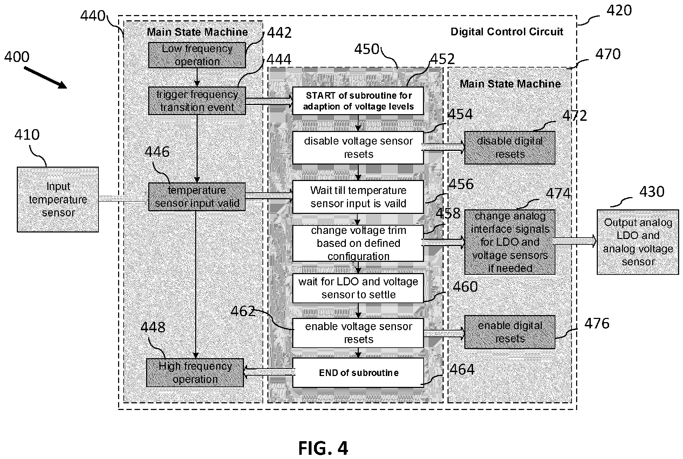

Referring now to FIG. 4, an example flowchart 400 is illustrated for a digital control circuit 420 (which may be a state machine 440 based implementation or a CPU-based implementation with a state machine-based implementation described) when switching from a low frequency operation 442 to a high frequency operation 448, according to some examples. In a main state machine 440, at 444, a frequency transition event is triggered, following which a subroutine 450 for adapting supply voltage levels is started at 452.

It is noted that in order to switch to a high frequency, some example implementations may first adapt the supply voltage (e.g., a low voltage and high frequency at the same time may not allowed as this could result in the timing violations). If a switch to a low frequency is performed, it may first need to reduce the frequency and only then lower the supply voltage (again, low voltage and high frequency at the same time is not allowed).

In this example flowchart 400, disabling and enabling of voltage sensor resets may be needed to avoid unnecessary resets. As a starting point, an input temperature sensor 410 measures a temperature of an integrated circuit of, say, the RFID device. The digital control circuit 420 provides an output supply voltage control signal 430 to an analog LDO regulator and/or an analog voltage sensor. In this example, when switching from high frequency operation 448 to a low frequency operation 442, a determination may be made in the main state machine 440 at 446 as to whether the temperature of the digital control circuit 420 provided by the input temperature sensor 410 is valid. This example may only be needed if the temperature measurement takes some time. As long as the temperature measurement is ongoing, the result is not valid. Once the temperature measurement has finished, a valid result can be obtained.

In the subroutine 450, the voltage sensor reset may be disabled at 454 and the digital resets disabled at 472. At 456, the subroutine 450 waits until the temperature sensor provides a valid sensor input following the determination at 446. Once a valid sensor input is received at 446, 456, the voltage trim may be changed, based on the defined configuration at 458. Following the change in the voltage trim at 458, the main state machine 440 creates at 474 and outputs at 430 control signals that are arranged to change the analog interface signals for the LDO and/or voltage sensor(s). Following the change in the voltage trim at 458, the subroutine 450 also waits for the LDO and voltage sensors to settle at 460 and enables the voltage sensor resets at 462. The main state machine 440 then enables the digital resets at 476 and the subroutine ends at 464.

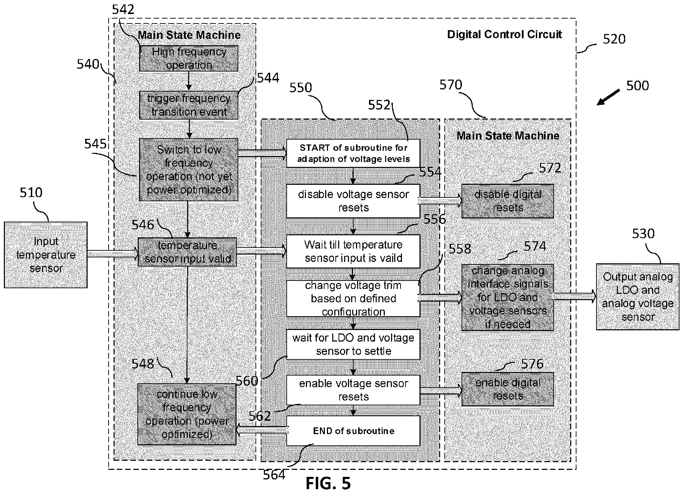

Referring now to FIG. 5, a further example flowchart 500 is illustrated for a digital control circuit 520 (which may be a state machine 540 based implementation or a CPU-based implementation with a state machine-based implementation described) when switching from a high frequency operation 542 to a low frequency operation 548, according to examples. In a main state machine 540, at 544, a frequency transition event is triggered and a switch to a low frequency operation is performed at 545, following which a subroutine 550 for adapting supply voltage levels is started at 552. In this example flowchart 500, disabling and enabling of voltage sensor resets may be needed to avoid unnecessary resets. An input temperature sensor 510 measures a temperature of the digital control circuit 520 of, say, the RFID device, which provides an output supply voltage control signal 530 to an analog LDO regulator and/or an analog voltage sensor. In this example, when switching from high frequency operation 542 to a low frequency operation 548, a determination is made in the main state machine 540 at 546 as to whether the temperature of the digital control circuit 520 provided by the input temperature sensor 510 is valid.

In the subroutine 550, the voltage sensor reset may be disabled at 554 and the digital resets disabled at 572. At 556, the subroutine 550 waits until the temperature sensor provides a valid sensor input following the determination at 546. Once a valid temperature sensor input is received at 546, 556, the voltage trim may be changed, based on the defined configuration at 558. Following the change in the voltage trim at 558, the main state machine 540 creates at 574 and outputs at 530 control signals that are arranged to change the analog interface signals for the LDO and/or voltage sensor(s). Following the change in the voltage trim at 558, the subroutine 550 also waits for the LDO and voltage sensors to settle at 560 and enables the voltage sensor resets at 562. The main state machine 540 then enables the digital resets at 576 and the subroutine ends at 564.

Referring now to FIG. 6, one example of a timing-waveform diagram 600 is illustrated that relates to responding to a change in an operational state of a device, according to some examples. A supply voltage waveform 610 illustrates the supply voltage transition at 612 from a median supply voltage 611 when the device temperature is between a lower temperature threshold (T1) and a higher temperature threshold (T2) to a higher supply voltage 614 when the device temperature is below the lower temperature threshold (T1). The supply voltage waveform 610 also illustrates the supply voltage transition at 616 from the higher supply voltage 614 when the device temperature is below the lower temperature threshold (T1) to a lower supply voltage 618 when the device temperature is above the higher temperature threshold (T2).

A second timing diagram 620 illustrates a timing of transitions between various operational states, namely state 'A' 622, state 'B' 624, state 'C' 626, etc. A third timing diagram 630 illustrates device operations/functions, triggered by actions in a fourth timing diagram 640. As per FIG. 3, the fourth timing diagram 640 initiates the state changes and a fifth timing diagram 650 only shows change in temperature, but has no influence on 640. As per FIG. 3, the fourth timing diagram 640 triggers the device operations/functions in the third timing diagram 630, which evaluates the temperature shown in the fifth timing diagram 650. If the temperature changed, trim values are adapted at 633 and 637.

As illustrated, the device temperature starts between the lower temperature threshold (T1) and the higher temperature threshold (T2) and at 652 transitions to a temperature that is below the lower temperature threshold (T1) 654. This transition at 652 is caused by a change of the temperature of the RFID device (e.g., by changing the ambient temperature, e.g. by moving an RFID into a colder environment). After, say the FSM at 642 initiated the change from state 'A' to state 'B', the temperature is measured at 654. Since it is different than 650, the LDO and voltage sensor outputs are adapted. In the third timing diagram 630 the device temperature is measured at 632 and trim values are changed at 633, following which the supply voltage is changed at 612. A settling time of the voltage sensor and/or LDO regulator is allowed at 634, following which a state transition is executed 644 at 624.

As also illustrated, the device temperature transitions at 657 to a temperature that is above the higher temperature threshold (T2) 658. This transition at 652 is caused by a change of the temperature of the RFID device (e.g., by changing the ambient temperature). Since the temperature at 658 is different than at 654 (last measurement, the LDO and voltage sensor outputs need to be adapted. In the third timing diagram 630 the device temperature is measured at 636 and trim values are changed at 637, following which the supply voltage is changed at 616. A settling time of the voltage sensor and/or LDO regulator is allowed at 638, following which a state transition is executed 648 at 628.

Thus, as illustrated, a switching from any state to another state (e.g. state 'A' 622 to state 'B' 624) includes the operations of: (i) measure temperature; (ii) determine whether the temperature is above or below a threshold (e.g. lower temperature threshold (T1) 654 or higher temperature threshold (T2) 658), then apply trim values for the LDO and/or voltage sensor; (iv) then wait a specific settling time to make sure that the output of the LDO and the voltage senor output is/are stable before switching to the new operational state.

Referring now to FIG. 7, a yet further example flowchart 700 is illustrated for a digital control circuit 720 (which may be a state machine 740 based implementation or a CPU-based implementation with a state machine-based implementation described) when switching from operational state 'A' 742 to operational state 'B' 748, according to examples. In a main state machine 740, at 744, a state transition event is triggered, following which a subroutine 750 for adapting supply voltage levels is started at 752 and the main state machine 740 takes note of an input temperature. In this example flowchart 700, disabling and enabling of voltage sensor resets may be needed to avoid unnecessary resets. An input temperature sensor 710 measures a temperature of the digital control circuit 720 of, say, the RFID device, which provides an output supply voltage control signal 730 to an analog LDO regulator and/or an analog voltage sensor. In this example, when switching from an operational state 'A' 742 to an operational state 'B' 748, a determination is made in the main state machine 740 at 746 as to whether the temperature of the digital control circuit 720 provided by the input temperature sensor 710 is valid, e.g., that temperature measurement has finished. If the temperature measurement has not yet finished, the operation waits till the result is available thereby indicating that the temperature measurement is valid.

In the subroutine 750, the voltage sensor reset may be disabled at 754 and the digital resets disabled at 772. At 756, the subroutine 750 waits until the temperature sensor provides a valid sensor input following the determination at 746. Once a valid sensor input is received at 746, 756, the voltage trim may be changed, based on the defined configuration at 758. Following the change in the voltage trim at 758, the main state machine 740 creates at 774 and outputs at 730 control signals that are arranged to change the analog interface signals for the LDO and/or voltage sensor(s). Following the change in the voltage trim at 758, the subroutine 750 also waits for the LDO and voltage sensors to settle at 760 and enable the voltage sensor resets at 762. The main state machine 740 then enables the digital resets at 776.

In alternative examples, it is envisaged that some steps in the flowcharts 400, 500 and 700 of FIG. 4, FIG. 5 and FIG. 7 may not be needed, as the approach may be solved by changing LDO and voltage sensor settings sequentially, say, and wait till each of them has settled before switching the other. In this alternative example, the resets do not need to be disabled, but the subroutine will still be performed. In a further alternative example, it is envisaged that swapping of disabling voltage sensors may be adopted followed by waiting until the temperature sensor input is determined as being valid.

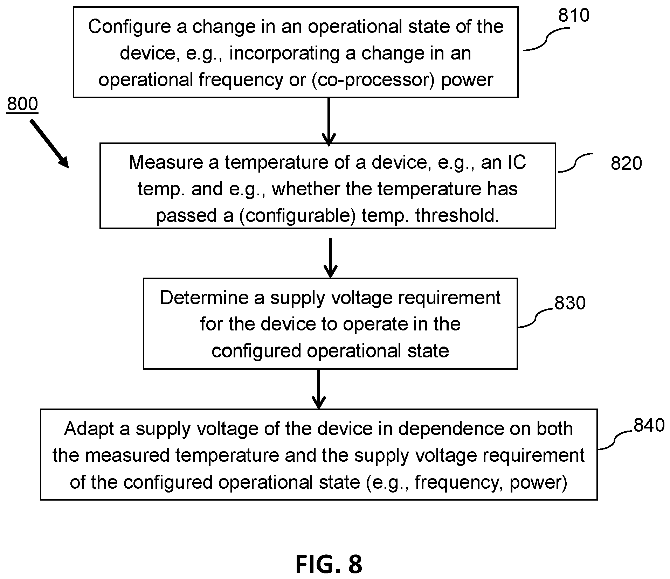

Referring now to FIG. 8, an overview example of a flowchart 800 illustrates a method for adapting a supply voltage of a device, according to some examples. The flowchart 800 includes, at 810, configuring a change in an operational state of the device, for example incorporating a change in an operational frequency of the device or power consumed by, say, a co-processor. In one example, a FSM knows that it wants to change from state 'A' to state 'B' or enable a function that needs to be operated at a higher frequency. At 820, the flowchart 800 includes measuring a temperature of the device, for example an IC temp. and for example whether the temperature has passed a (configurable) temp. threshold. At 830, the flowchart 800 includes determining a supply voltage level for the device to operate in the configured operational state. At 840, the flowchart 800 includes adapting a supply voltage (and in some examples of the sensor level) of the device in dependence on at least the measured temperature and the supply voltage level (and in some examples of the sensor level) of the configured operational state (e.g., operational frequency and/or power (consumption)).

It is envisaged that the concepts described herein may be used for various applications, and not just RFID devices, for example where power/leakage may be of concern and/or constant surveillance of the power domain should be monitored by voltage sensors (e.g., as would be found in low-power ICs).

It will be further appreciated that, for clarity purposes, the described embodiments with reference to different functional units and processors may be modified or re-configured with any suitable distribution of functionality between different functional units or processors being possible, without detracting from the concepts described herein. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

In the foregoing specification, the examples have been described with reference to specific examples of potential implementations or applications. It will, however, be evident that various modifications and changes may be made therein without departing from the scope as set forth in the appended claims and that the claims are not limited to the specific examples described above.

The connections as discussed herein may be any type of connection suitable to transfer signals from or to the respective nodes or devices or circuits, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals. Those skilled in the art will recognize that the architectures depicted herein are merely exemplary, and that in fact many other architectures can be implemented which achieve the same functionality.

Any arrangement of components to achieve the same functionality is effectively 'associated' such that the desired functionality is achieved. Hence, any two components herein combined to achieve a particular functionality can be seen as 'associated with' each other such that the desired functionality is achieved, irrespective of architectures or intermediary components. Likewise, any two components so associated can also be viewed as being 'operably connected,' or 'operably coupled,' to each other to achieve the desired functionality.

Furthermore, those skilled in the art will recognize that boundaries between the above-described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments. Also, for example, in one embodiment, the illustrated examples may be implemented as circuitry located on a single integrated circuit or within a same device.

In some examples, the various components within the RFID may be realized in discrete or integrated component form, with an ultimate structure therefore being an application-specific or design selection. As the illustrated embodiments may, for the most part, be implemented using electronic components and circuits known to those skilled in the art, details will not be explained in any greater extent than that considered necessary as illustrated below, for the understanding and appreciation of the underlying concepts described herein and in order not to obfuscate or distract from the teachings described. A skilled artisan will appreciate that the level of integration of processor and memory circuits within the RFID may be, in some instances, implementation-dependent.

Also, for example, the examples, or portions thereof, may implemented as software or code representations of physical circuitry or of logical representations convertible into physical circuitry, such as in a hardware description language of any appropriate type. Also, the examples described are not limited to physical devices or units implemented in non-programmable hardware but can also be applied in programmable devices or units by operating in accordance with suitable program code, such as minicomputers, personal computers, notepads, personal digital assistants, automotive and other embedded systems, cell phones and various other wireless devices, commonly denoted in this application as 'devices'. However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms 'a' or 'an,' as used herein, are defined as one or more than one. Also, the use of introductory phrases such as 'at least one' and 'one or more' in the claims should not be construed to imply that the introduction of another claim element by the indefinite articles 'a' or 'an' limits any particular claim containing such introduced claim element to inventions containing only one such element, even when the same claim includes the introductory phrases 'one or more' or 'at least one' and indefinite articles such as 'a' or 'an.' The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. A method (800) for adapting a supply voltage of a device comprising:
configuring (810) a change in an operational state of the device;
measuring (820) a temperature of the device;
determining (830) a supply voltage level for the device to operate in the configured operational state;
adapting (840) a supply voltage of the device in dependence on at least the measured temperature and the supply voltage level for the device to operate in the configured operational state.

2. The method (800) of Claim 1 wherein configuring the change in an operational state of the device comprises:
changing at least one of: a power consumption of the device, an operational frequency of the device;
and wherein
adapting (840) the supply voltage of the device comprises adapting (840) the supply voltage of the device in dependence on at least the measured temperature and the supply voltage level for the device to operate at the changed operational frequency or power consumption.

3. The method (800) of Claim 1 or Claim 2 wherein measuring a temperature of the device comprises determining that the temperature of the device has passed a temperature threshold and adapting the supply voltage of the device comprises adapting the supply voltage of the device in dependence on at least the measured temperature having passed the temperature threshold and the supply voltage level for the device to operate in the configured operational state.

4. The method (800) of Claim 3 wherein the device employs multiple temperature thresholds.

5. The method (800) of Claim 3 or Claim 4 wherein the device employs configurable temperature thresholds.

6. The method (800) of any preceding Claim wherein adapting the supply voltage of the device in dependence on the measured temperature and the configured operational state comprises adapting the supply voltage of the device in a step-wise manner with respective voltage steps providing a constant supply voltage across a temperature range.

7. The method (800) of Claim 6 wherein the respective voltage steps providing a constant supply voltage are configurable in dependence on one of:
the operational state of the device and the measured temperature of the device;
a frequency of operation of the device and the measured temperature of the device.

8. The method (800) of any preceding Claim wherein adapting the supply voltage of the device in dependence on the measured temperature and the configured operational state additionally comprises adapting a sensing range of a voltage sensor or low-drop out regulator output in response to a measured temperature of the device.

9. The method (800) of Claim 8 further comprising performing the adapting the sensing range of a voltage sensor or low-drop out regulator output in response to a measured temperature of the device independently of adapting the supply voltage of the device.

10. The method (800) of any preceding Claim wherein configuring a change in an operational state of the device comprises one of:
in a state machine design of the device, switching from a first operation to a second operation;
in a central processing unit, CPU, design of the device, enabling a coprocessor or executing a sub-routine.

11. The method (800) of any preceding Claim wherein measuring a temperature of the device is performed in response to a change in an operational state of the device or a change in an operating frequency of the device.

12. The method (800) of any preceding Claim wherein the device is a radio frequency identifier, RFID, device.

13. A device comprising:
a voltage supply configured to provide a voltage to a plurality of circuits of the device;
a temperature sensor configured to measure a temperature of the device;
a digital control circuit operably coupled to the voltage supply and the temperature sensor and arranged to:
configure a change in an operational state of the device;
determine a supply voltage level for the device to operate in the configured operational state; and
adapt the supply voltage provided to the plurality of circuits in dependence on at least the measured temperature and the supply voltage level for the device to operate in the configured operational state.

14. The device of Claim 13 wherein the change in the operational state of the device comprises a change in at least one of: a power consumption of the device, an operational frequency of the device; and wherein the digital control circuit is configured to adapt the supply voltage of the device in dependence on at least the measured temperature and the supply voltage level for the at least one of: the power consumption of the device, the operational frequency of the device.

15. The device of Claim 13 or Claim 14 wherein the temperature sensor is configured to determine that the temperature of the device has passed a temperature threshold, wherein the digital control circuit is configured to adapt the supply voltage of the device in dependence on at least the measured temperature having passed the temperature threshold and the supply voltage level for the device to operate in the configured operational state.

## Amended claims

### Amended claims in accordance with Rule 137(2) EPC.

1. A method (800) for adapting a supply voltage of a device comprising:
configuring (810) a change in an operational state of the device that employs configurable temperature thresholds;
measuring (820) a temperature of the device;
determining (830) that the temperature of the device has passed a temperature threshold and determining a supply voltage level for the device to operate in the configured operational state;
adapting (840) a supply voltage of the device in dependence on:
at least the measured temperature having passed the temperature threshold; and
the supply voltage level for the device to operate in the configured operational state, and
adapting a sensing range of a voltage sensor or low-drop out regulator output in response to the measured temperature of the device.

2. The method (800) of Claim 1 wherein configuring the change in an operational state of the device comprises:
changing at least one of: a power consumption of the device, an operational frequency of the device;
and wherein
adapting (840) the supply voltage of the device comprises adapting (840) the supply voltage of the device in dependence on at least the measured temperature and the supply voltage level for the device to operate at the changed operational frequency or power consumption.

3. The method (800) of any preceding Claim wherein adapting the supply voltage of the device in dependence on the measured temperature and the configured operational state comprises adapting the supply voltage of the device in a step-wise manner with respective voltage steps providing a constant supply voltage across a temperature range.

4. The method (800) of Claim 3 wherein the respective voltage steps providing a constant supply voltage are configurable in dependence on one of:
the operational state of the device and the measured temperature of the device;
a frequency of operation of the device and the measured temperature of the device.

5. The method (800) of Claim 1 further comprising performing the adapting the sensing range of a voltage sensor or low-drop out regulator output in response to a measured temperature of the device independently of adapting the supply voltage of the device.

6. The method (800) of any preceding Claim wherein configuring a change in an operational state of the device comprises one of:
in a state machine design of the device, switching from a first operation to a second operation;
in a central processing unit, CPU, design of the device, enabling a coprocessor or executing a sub-routine.

7. The method (800) of any preceding Claim wherein measuring a temperature of the device is performed in response to a change in an operational state of the device or a change in an operating frequency of the device.

8. The method (800) of any preceding Claim wherein the device is a radio frequency identifier, RFID, device.

9. A device that employs configurable temperature thresholds, the device comprising:
a voltage supply configured to provide a voltage to a plurality of circuits of the device;
a temperature sensor configured to measure a temperature of the device;
a digital control circuit operably coupled to the voltage supply and the temperature sensor and arranged to:
configure a change in an operational state of the device;
determine that the temperature of the device has passed a temperature threshold;
determine that a supply voltage level for the device to operate in the configured operational state; and
adapt the supply voltage provided to the plurality of circuits in dependence on at least the measured temperature having passed the temperature threshold and the supply voltage level for the device to operate in the configured operational state; and
adapt a sensing range of a voltage sensor or low-drop out regulator output in response to the measured temperature of the device.

10. The device of Claim 9 wherein the change in the operational state of the device comprises a change in at least one of: a power consumption of the device, an operational frequency of the device; and wherein the digital control circuit is configured to adapt the supply voltage of the device in dependence on at least the measured temperature and the supply voltage level for the at least one of: the power consumption of the device, the operational frequency of the device.
